(19) **Europäisches Patentamt / European Patent Office / Office européen des brevets**

(11) **EP 3 087 356 B1**

(12) # FASCICULE DE BREVET EUROPEEN

(45) Date de publication et mention
de la délivrance du brevet:
**13.12.2017 Bulletin 2017/50**

(21) Numéro de dépôt: **14831001.4**

(22) Date de dépôt: **22.12.2014**

(51) Int Cl.:
**G01H 1/00** *(2006.01)*     **G01P 3/44** *(2006.01)*
**G01P 3/487** *(2006.01)*

(86) Numéro de dépôt international:
**PCT/FR2014/053510**

(87) Numéro de publication internationale:
**WO 2015/097396 (02.07.2015 Gazette 2015/26)**

(54) **ENSEMBLE POUR TURBOMACHINE POUR MESURER DES VIBRATIONS SUBIES PAR UNE PALE EN ROTATION**

TURBINENMOTORANORDNUNG ZUR MESSUNG DER SCHWINGUNGEN EINER LAUFSCHAUFEL

TURBINE ENGINE ASSEMBLY FOR MEASURING THE VIBRATIONS TO WHICH A ROTATING BLADE IS SUBJECTED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363470**

(43) Date de publication de la demande:
**02.11.2016 Bulletin 2016/44**

(73) Titulaire: **Safran Helicopter Engines
64510 Bordes (FR)**

(72) Inventeurs:
• **TALON, Arnaud
F-64420 Espoey (FR)**
• **CAZAUX, Jean-Yves
F-64230 Artiguelouve (FR)**
• **CHAUVIN, Guillaume
F-64290 Gan (FR)**
• **GARNIER, Julien
F-64110 Jurançon (FR)**

(74) Mandataire: **Regimbeau
20, rue de Chazelles
75847 Paris Cedex 17 (FR)**

(56) Documents cités:
FR-A1- 2 956 206      GB-A- 1 204 627
US-A- 3 208 269      US-A- 4 757 717
US-A1- 2010 045 273

**Description**

DOMAINE GENERAL

L'invention se rapporte au domaine des aubages mobiles en rotation.

L'invention concerne plus particulièrement le domaine de la caractérisation de vibrations auxquelles de tels aubages sont soumis lorsqu'ils sont mis en rotation.

ETAT DE L'ART

Une roue aubagée est un moyeu comportant une pluralité d'aubages, ou pales. Lors de la conception et de la certification de turbomachines, il est nécessaire de vérifier si une telle roue aubagée mobile en rotation dans un carter possède des fréquences propres susceptibles d'être excitées dans le domaine de fonctionnement du moteur de telles turbomachines.

Pour les modes propres identifiés dans ce domaine de fonctionnement, il est également nécessaire de quantifier les niveaux de contraintes vibratoires associées. US 4757717 décrit un appareil de mesure des vibrations d'une machine tournante. Une première technique connue pour caractériser les vibrations subies par des aubages en fonctionnement consiste en l'utilisation de jauges de déformation collées sur la roue aubagée. A partir d'une mesure de microdéformations en surface du matériau, il est possible de caractériser dans le domaine fréquentiel les aubages et de calculer les contraintes au sein du matériau.

Cette première technique comporte cependant de nombreux inconvénients.

Premièrement, les jauges collées sur les pales sont soumises à des efforts centrifuges colossaux (de l'ordre de 100000g) associés potentiellement à des températures très importantes, notamment lorsque l'instrumentation est faite sur une turbine haute pression. La durée de vie des jauges est par conséquent limitée.

Deuxièmement, la pose de jauge demande beaucoup de savoir-faire, de minutie et de temps (notamment pour la cuisson de ciments dans lesquels sont enchâssées les jauges).

Troisièmement, il est nécessaire de faire transiter le signal issu des jauges embarquées dans la roue aubagée mobile vers un repère fixe. Pour ce faire, des fils de connexion doivent cheminer sur l'arbre moteur jusqu'à un collecteur tournant. Outre la longueur des fils ainsi que la connexion tournante du collecteur, génératrices de bruit de mesures, les études préliminaires pour l'intégration d'un collecteur tournant sur un moteur sont longues et coûteuses.

Une deuxième technique, basée sur l'utilisation de sondes optiques positionnées en vis-à-vis des pales en rotation, et donc dans un repère fixe, a été proposée afin de pallier ces inconvénients.

Cette deuxième technique met en oeuvre une mesure des écarts de temps de passage devant les sondes optiques pour deux états vibratoires d'une pale (en présence ou non de vibrations). Un tel procédé de mesure, nommé « tip timing » en anglais, permet de recalculer des amplitudes de déplacements alternés en tête de pale. La connaissance des déformées modales permet de mettre en relation les niveaux de déplacement en tête de pale avec les niveaux de contraintes dans la pale.

Cette deuxième technique ne permet cependant pas d'obtenir d'information fréquentielle sur les vibrations mesurées. Ne sont en effet identifiables par cette deuxième technique que des niveaux globaux de déplacements en tête de pale, sans savoir quel mode de pale se trouve excité. Dans un but de surveillance vibratoire, cette limitation peut être largement pénalisante.

Par ailleurs, la méthode de « tip timing » présente parfois des ambiguïtés ne permettant pas d'identifier l'ordre d'excitation responsable des niveaux de déplacements enregistrés.

PRESENTATION DE L'INVENTION

L'invention vise donc à permettre la caractérisation de vibrations subies par une pale lors de sa mise en rotation, notamment de quantifier des vitesses de vibration subies par la pale.

Dans ce but et selon un premier aspect, il est proposé un ensemble pour turbomachine selon la revendication 1. Selon un deuxième aspect, il est proposé un procédé de mesure de vibrations d'une pale d'un ensemble pour turbomachine selon le premier aspect, comprenant les étapes de :

- mise en rotation de la roue aubagée dans le carter,
- mesure aux bornes de chacun des conducteurs électriques d'une tension électrique respective induite par l'aimant contenu dans la tête de la pale en vis-à-vis du carter,
- détermination de la vitesse de l'aimant,
- calcul d'une vitesse de vibration axiale subie par la tête de la pale à partir des deux tensions électriques mesurées et de la vitesse de l'aimant déterminée.

L'aimant génère un champ magnétique. Au cours de la mise en rotation de la roue aubagée mobile en rotation par rapport au carter, ce champ magnétique induit un courant électrique dans chacun des deux conducteurs électriques compris dans le carter, lequel est localisé en vis-à-vis de la tête de la pale qui embarque l'aimant. Chaque courant électrique se propage jusqu'aux bornes du conducteur électrique correspondant, faisant apparaître une tension électrique à ces bornes. La tension aux bornes de chaque conducteur électrique permet de caractériser des vibrations subies par la pale. De plus, l'agencement mutuel des deux conducteurs électriques dans l'ensemble pour turbomachine proposé permet d'obtenir deux tensions, à partir desquelles une vitesse vibratoire axiale en tête de pale peut être déterminée.

L'ensemble pour turbomachine proposé permet ainsi de s'affranchir de mesures directes de contraintes sur la roue aubagée, et d'éviter une instrumentation lourde dans le repère mobile lié à la pale, pour caractériser ses vibrations. L'instrumentation réalisée est minimale dans ce repère mobile (seul un aimant est intégré à la pale) et également minimale dans le repère fixe lié au carter (insertion de deux conducteurs électriques sur ou dans le carter), pour quantifier des vibrations axiales de la pale instrumentée.

L'ensemble selon le premier aspect peut être complété par les caractéristiques suivantes, prises seules ou en une quelconque de leurs combinaisons techniquement possibles.

La première partie centrale peut s'étendre dans un plan de parcours de l'aimant autour de l'axe de rotation de la roue aubagée, et la deuxième partie centrale s'étendre orthogonalement au plan de parcours. Dans un tel mode de réalisation, la tension mesurée aux bornes du premier conducteur électrique est représentative des vibrations de l'aimant effectuées hors de ce plan de parcours, et cette tension est indépendante du mouvement rotatif de la pale autour de son axe de rotation (ainsi, dans une situation parfaite, dans laquelle la pale ne serait sujette à aucune vibration, la tension aux bornes du conducteur électriques lorsque l'aimant se trouve en vis-à-vis d'une portion de la partie centrale serait minimisée).

La première partie centrale peut par ailleurs former une portion d'un cercle centré sur un point de l'axe de rotation de la roue aubagée, et la deuxième partie centrale traverse le plan de parcours en un point dudit cercle. Un tel mode de réalisation est simple à mettre en oeuvre dans le cas où le carter présente une surface interne en regard de la roue aubagée qui est cylindrique ; par ailleurs, dans ce mode de réalisation, le champ magnétique généré par l'aimant a alors une influence sur des portions respectives des parties centrales des conducteurs électriques qui sont de même longueurs.

L'aimant peut de plus être adapté pour émettre un champ magnétique selon un axe radial par rapport à l'axe de rotation de la roue aubagée, le champ magnétique généré étant isotrope autour de l'axe radial. Avec un tel agencement de champ magnétique, la vitesse de vibration axiale de la pale devient proportionnelle au ratio entre les tensions mesurées aux bornes respectives des deux conducteurs électriques.

Les tensions aux bornes des deux conducteurs électriques sont généralement faibles. Aussi, un amplificateur de tension peut être relié aux bornes du conducteur électrique, les mesures étant réalisées en sortie de cet amplificateur.

Les deux conducteurs électriques peuvent par ailleurs être noyés au moins partiellement dans un dépôt abradable localisé sur une surface interne du carter en regard de la roue aubagée, le dépôt abradable étant réalisé en un matériau paramagnétique ou diamagnétique. Ainsi, le flux magnétique de l'aimant est alors très peu modifié, et on peut exploiter tout le flux magnétique généré par l'aimant dans les mesures réalisées

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 est une vue en coupe partielle d'un ensemble pour turbomachine selon un mode de réalisation de l'invention.
- La figure 2a est une vue schématique en perspective de l'ensemble de la figure 1.
- La figure 2b détaille une portion de l'ensemble illustré en figure 2a.
- La figure 3 est un organigramme d'étapes d'un procédé de mesures de vibrations subies par une pale, selon un mode de réalisation de l'invention.
- La figure 4 représente des repères associés à différents éléments de l'ensemble pour turbomachine représenté sur les figures 1 et 2.
- La figure 5 illustre schématiquement des interactions électromagnétiques entre des éléments de l'ensemble pour turbomachine illustré sur les figures 1 et 2.

Sur l'ensemble des figures, les éléments similaires portent des références identiques.

**EP 3 087 356 B1**

DESCRIPTION DETAILLEE DE L'INVENTION

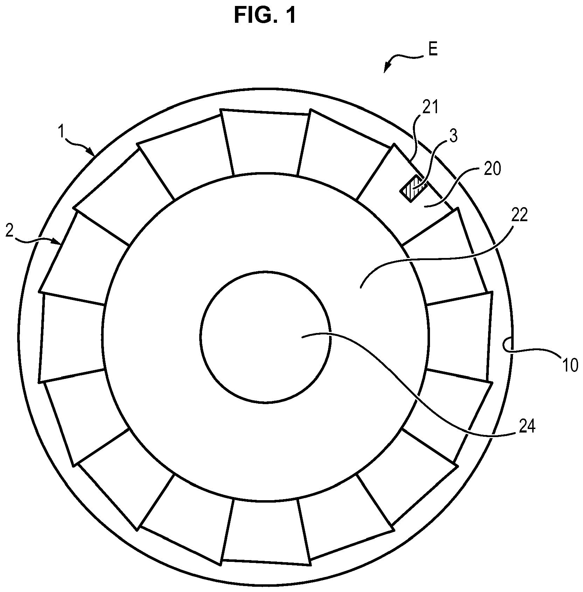

En référence la **figure 1,** un ensemble E pour turbomachine comprend un carter 1 et une roue aubagée 2 mobile en rotation par rapport au carter 1.

Le carter 1 présente une surface interne 10 définissant un espace dans lequel est logé la roue aubagée 2. Cette surface interne 10 est par exemple cylindrique.

La roue aubagée 2 est monté sur un arbre moteur 24 s'étendant selon un axe de rotation (perpendiculaire au plan de la figure 1). La roue aubagée 2 comprend un disque 22 autour de l'arbre 24, et une pluralité de pales. Chaque pale s'étend sensiblement radialement depuis le disque 22 jusqu'à se terminer par une tête respective. Ainsi, la tête de chaque pale est en vis-à-vis d'une portion de surface du carter 1, quelle que soit la position angulaire occupée par la roue aubagée 2 mobile relativement au carter 1.

Au moins une des pales de la roue aubagée, référencée 20, comporte en sa tête 21 un aimant 3.

L'aimant 3 est solidaire de la pale 20, elle-même solidaire du disque 22 ; on considéra dans la suite que le mouvement de l'aimant 3 est représentatif du mouvement de la tête 21 de la pale 20.

La topologie du champ magnétique créé par l'aimant 3 est similaire à celle d'un solénoïde à plusieurs spires : elle forme un tore entourant l'aimant 3 et orientées de son pôle nord vers son pôle sud. L'aimant 3 adapté pour générer un champ magnétique d'orientation radiale par rapport à l'axe de rotation de la roue aubagée 2.

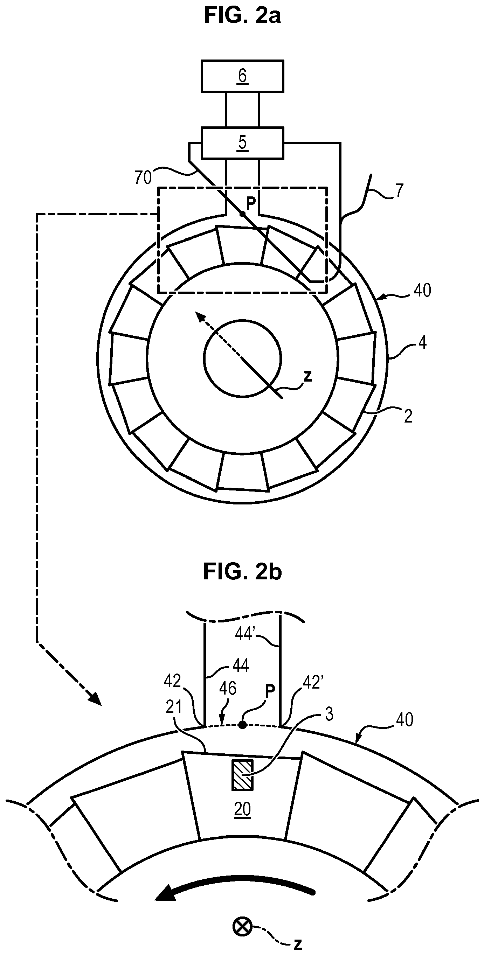

En référence à la **figure 2a,** le carter 1 comprend un premier conducteur électrique 4 et un deuxième conducteur électrique 7.

Les bornes de chaque conducteur électrique 4, 7 sont reliées à des entrées d'un amplificateur 5 de tension identique ou différent.

L'ensemble E comprend également un dispositif de mesure 6 en sortie du ou des amplificateurs 5 de tension. Ce dispositif 6 comprend des moyens pour mettre en oeuvre des calculs sur des valeurs de tensions mesurées par ce dispositif 6.

En référence à la **figure 2b,** le premier conducteur électrique 4 comprend une partie dite « centrale » formant une spire ou une portion de spire autour de l'axe de rotation de la roue aubagée 2. Cette partie centrale 40 est par exemple fixée sur la surface interne 10 du carter 1 en regard de la roue aubagée 2.

La partie centrale 40 comporte deux extrémités 42, 42' localisés à des positions angulaires différentes autour de l'axe de rotation de la roue aubagée 2.

Le conducteur électrique 4 comprend également deux branches 44, 44' prolongeant chacune une extrémité respective de la partie centrale 40.

De préférence, la partie centrale 40 ne s'étend pas sur toute la circonférence du carter 1 autour de l'axe de rotation de la roue aubagée 2, mais forme un arc formé par un secteur angulaire de moins de 360 degrés autour de l'axe de rotation de la roue aubagée. Les deux extrémités 42, 42' délimitent alors une portion de circonférence du carter 1 non couverte par la partie centrale 40 ; cette potion non couverte est qualifié dans la suite « d'ouverture de spire », référencée 46.

Les branches 44, 44' peuvent s'étendre dans une direction sensiblement radiale vers l'extérieur par rapport à l'axe de rotation de la roue aubagée 2 dans le carter 1. Chaque branche 44 (respectivement 44') forme par exemple avec la partie centrale 40, en l'extrémité 42 (respectivement 42') qu'elle prolonge, un angle compris entre 80 degrés et 100 degrés, préférentiellement 90 degrés.

La partie centrale 40 et les branches 44, 44' qui prolongent cette partie centrale 40 s'étendent dans un plan qui coïncide avec un plan de parcours de l'aimant 3 (le plan des figures 2a et 2b) au cours d'une révolution de la pale 20 autour de l'axe de rotation de la roue aubagée 2.

Lorsque la roue aubagée 2 occupe une position angulaire telle que l'aimant 3 se trouve en vis-à-vis d'un point de la partie centrale 40, le mouvement relatif du champ magnétique généré par l'aimant 3 par rapport à la partie centrale 40 lorsque la pale 20 vibre induit un courant électrique dans les branches 44 et 44'.

Le deuxième conducteur électrique 7 comporte une partie 70 dite également « centrale » traversant l'ouverture de spire 46 laissée entre les extrémités 42, 42' du premier conducteur électrique 4.

Cette partie centrale 70 est sans contact électrique avec le premier conducteur 4, et peut également être fixée sur la surface interne 10 du carter 1 en regard de la roue aubagée 2.

Le deuxième conducteur électrique 4 passe notamment par un point P du plan de parcours de l'aimant 3, ce point P étant situé entre les deux extrémités 42, 42' en regard l'une de l'autre, par exemple à mi-chemin entre ces extrémités 42. Le point P se situe au même rayon que la partie centrale 40 du conducteur 4.

La partie centrale 70 du deuxième conducteur électrique 7 est prolongées à ses deux extrémités par deux branches formant les bornes du deuxième conducteur électrique 7, reliées à l'amplification 5.

Lorsque la roue aubagée 2 occupe une position angulaire telle que l'aimant 3 se trouve en vis-à-vis du point P de la partie centrale 70, le champ magnétique généré par l'aimant 3 induit un courant électrique dans une portion de la partie centrale 70 au voisinage de ce point P.

**4**

La partie centrale 70 du deuxième conducteur 7 est de préférence rectiligne au voisinage de ce point P, et orientée orthogonalement au plan dans lequel s'étend le premier conducteur électrique 4 ; la partie centrale 70 est alors parallèle à l'axe de rotation z de la roue aubagée 2.

Dans le mode de réalisation illustré sur les figures 2a et 2b, le point P et la partie centrale 40 du premier conducteur électrique 4 définissent des portions d'un même cercle ; de cette manière, l'entrefer entre l'aimant 3 et un point quelconque de la partie centrale 40, et l'entrefer entre l'aimant 3 et le point P sont de longueurs identiques : le champ magnétique B généré par l'aimant 3 a alors une influence comparable, voire identique, sur des portions respectives des parties centrales 40, 70 des conducteurs électriques 4, 7.

*Principe général de procédé de mesure de vibrations de pale*

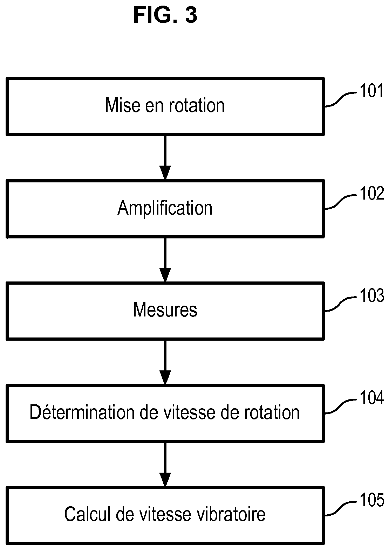

Sont représentées sur la **figure 3** les étapes d'un procédé de mesure de vibrations subies par la pale 20 comprenant l'aimant 3.

Dans une étape préliminaire 101, la roue aubagée 2 est mise en rotation autour de son axe de rotation. Cette mise en rotation est susceptible de susciter des vibrations de la pale 20.

Une période de révolution de la pale 20 autour de l'axe de rotation de la roue aubagée 2 comprend deux phases différentes, correspondant chacune à une gamme respective de positions angulaires de la roue aubagée 2 mobile par rapport au carter 1 : une phase au cours de laquelle l'aimant 3 se trouve en vis-à-vis d'une portion de la partie centrale 40, et une phase au cours de laquelle l'aimant 3 se trouve en vis-à-vis de l'ouverture de spire 46 laissée entre ses deux extrémités 42, 42'.

Lorsque l'aimant 3 est en vis-à-vis d'une portion de la partie centrale 40 du premier conducteur électrique 4, le mouvement vibratoire relatif du champ magnétique B généré par l'aimant 3, par rapport à la partie centrale 40, induit un premier courant électrique dans la partie centrale 40, qui se propage jusqu'aux bornes formées par les branches 44, 44'. Une tension U1 est alors générée entre les deux bornes du premier conducteur électrique 4.

Similairement, lorsque l'aimant 3 est en vis-à-vis de l'ouverture de spire 46, et donc en vis-à-vis de la partie centrale 70 du deuxième conducteur électrique 7, le mouvement vibratoire relatif du champ magnétique B généré par l'aimant 3, par rapport à la partie centrale 70, induit un deuxième courant électrique dans la partie centrale 70, qui se propage jusqu'aux bornes du deuxième conducteur électrique 7. Une tension U2 est alors générée entre les deux bornes du deuxième conducteur électrique 7.

Les tensions U1 et U2, généralement très faibles, sont amplifiées par l'amplificateur 5 au cours d'une étape 102.

Dans une étape 103, le dispositif de mesure 6 acquiert les tensions U1 et U2 amplifiées par le ou les amplificateurs 5.

Dans une étape 104, le dispositif de mesure 6 détermine la vitesse de rotation de la pale 20 à partir de l'une et/ou de l'autre tension mesurée. Comme il le sera détaillé dans la suite, la vitesse de rotation de la pale 20 est déduite de la durée d'un tour de l'aimant autour de l'axe de rotation, cette durée étant mise en évidence par des variations de tension mesurées.

Dans une étape 104, le dispositif 6 calcule une vitesse de vibration axiale subie par la tête de la pale à partir des deux tensions électriques mesurées.

Les actions électromagnétiques de l'aimant 3 au cours des deux phases précitées vont maintenant être décrites plus en détail.

*Action électromagnétique de l'aimant 3 lorsqu'il se trouve en vis-à-vis de la partie centrale 40*

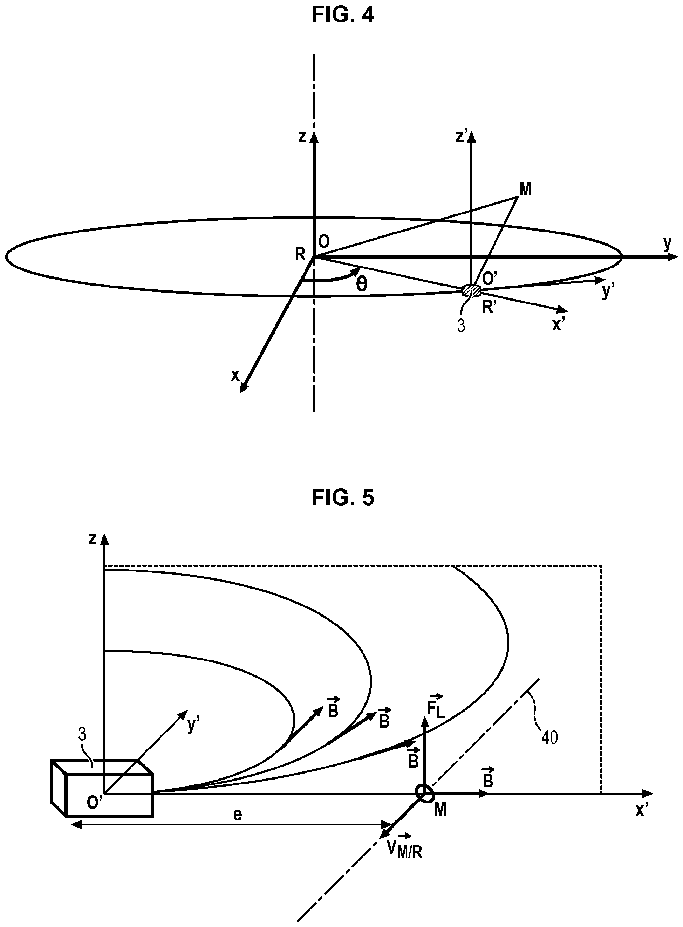

En référence à la **figure 4,** on définit à titre préliminaire un repère fixe R associé au carter 1, et un repère mobile R' associé à l'aimant 3.

Le repère fixe R est défini par un centre O l'axe de rotation de la roue aubagée 2, référencé z, et des axes x et y définissant un plan perpendiculaire à l'axe moteur et contenant le mouvement de l'aimant 3.

Le repère R' mobile est défini par un centre O' représentatif de la position de l'aimant 3, un axe z' parallèle à l'axe z, un axe x' porté par la droite OO', et un axe tel que le repère R' est un trièdre direct. Le repère mobile R' forme un angle θ par rapport au repère fixe R.

De façon générale, les lois de changement de repère de R à R' d'un point M dans le repère R' imposent la relation suivante :

$$\overrightarrow{V_{M/R}} = \overrightarrow{V_{O'/R}} + \overrightarrow{V_{M/R'}}$$

En référence à la **figure 5,** on considère comme point M un point de la partie centrale 40 du premier conducteur 4. On peut alors écrire :

$$\overrightarrow{V_{O'/R}} = -\overrightarrow{V_{M/R'}}$$

Cette relation montre que, de façon équivalente, l'aimant 3 en tête de pale 20 se déplace face à la partie centrale 40 fixe dans le repère fixe, ou que la partie centrale 40 se déplace face à l'aimant 3 fixe dans le repère mobile.
Si on considère un électron appartenant à la partie centrale 40, immobile dans le repère fixe R, sa vitesse apparente dans le repère tournant R' sera le vecteur $\overrightarrow{V_{M/R'}}$ c'est-à-dire la vitesse qu'aurait un point du repère tournant dans le repère fixe à la distance r + e, où e désigne l'entrefer entre l'aimant 3 et la partie centrale 40 et r la distance OO'.
Si on considère que ce point M est parfaitement dans l'axe de l'aimant 3 O'x', la résultante de la force de Lorentz Fl qui s'appliquera sur l'électron sera orientée comme le montre la figure 5.
On peut considérer le dispositif dans le plan O'x'z et les composantes du champ B peuvent être considérés seulement sur les composantes x' et z. La vitesse d'avancement de l'électron dans le repère tournant est celle qu'aurait un point fixe dans le repère tournant à la distance r + e, prenant en compte le rayon r de l'aube et l'entrefer e entre l'aimant 3 et l'abscisse dans le repère tournant du point M. On peut alors écrire le champ électromoteur de la manière suivante :

$$\vec{E}_M = \vec{v}_{M/R} \times \vec{B} = \begin{vmatrix} 0 \\ (r+e)\dot{\theta} \\ 0 \end{vmatrix} \times \begin{vmatrix} B_{x'} \\ B_{y'} \\ B_{z'} \end{vmatrix} = \begin{vmatrix} (r+e)\dot{\theta}B_{z'} \\ 0 \\ -(r+e)\dot{\theta}B_{x'} \end{vmatrix} = \begin{vmatrix} E_{x'} \\ E_{y'} \\ E_{z'} \end{vmatrix}$$

Lorsque l'aimant 3 est soumis à des vibrations de la pale 20, Le champ électromoteur ainsi généré par le mouvement vibratoire de la pale 20 devient :

$$\vec{E}_M = \vec{V'} \times \vec{B} = \begin{vmatrix} v_{VIBx} \\ (r+e)\dot{\theta} + v_{VIBy} \\ v_{VIBz} \end{vmatrix} \times \begin{vmatrix} B_{x'} \\ B_{y'} \\ B_{z'} \end{vmatrix} = \begin{vmatrix} (r+e)\dot{\theta}B_{z'} + v_{VIBy}B_{z'} - v_{VIBz}B_{y'} \\ v_{VIBz}B_{x'} - v_{VIBx}B_{z'} \\ v_{VIBx}B_{y'} - (r+e)\dot{\theta}B_{x'} - v_{VIBy}B_{x'} \end{vmatrix} = \begin{vmatrix} E_{Mx'} \\ E_{My'} \\ E_{Mz'} \end{vmatrix}$$

où :

$$\overrightarrow{V_{M/R'}} + \overrightarrow{V_{M/R'}} = \overrightarrow{V'}$$

Un courant induit dans la partie centrale 40 est mesurable lorsque le champ électromoteur sera orienté selon la composante y, c'est-à-dire dans l'axe du conducteur. Une composante mesurable sera donc :

$$\overrightarrow{E_{Mutile}} = (Vvibz.B_{x'} - Vvibx.B_{z'})\overrightarrow{e'}_y$$

Par ailleurs si on fait l'hypothèse que l'aimant 3 est contenu dans le plan de la partie centrale 40, cette composante se réécrit :

$$\overrightarrow{E_{Mutile}} = (Vvibz.B_{x'})\overrightarrow{e'}_y$$

En conséquence, dans le cas où l'aimant 3 est dans le plan de la partie centrale 40, seul un comportement vibratoire selon l'axe z (l'axe de rotation) conduira à des courants induits mesurables. En l'absence d'activité vibratoire, il n'y aura donc pas de signal mesurable.
La tension instantanée U1 mesurée aux bornes du conducteur électrique 4 alors qu'un segment AB est présent dans le champ d'influence de l'aimant 3 s'exprime alors sous la forme suivante :

$$U_1 = \int_A^B \vec{E}_m . \overrightarrow{dl} = \int_A^B V_{VIBz'} B_{x'} \, \vec{e}_{y'} . \overrightarrow{dl} = V_{VIBz'} B_{x'} \, l_{AB}$$

où $l_{AB}$ désigne la longueur du segment AB soumis à l'influence de l'aimant 3, $B_{x'}$ est la composante radiale du champ magnétique généré par l'aimant 3, et Vvibz' est la composante de vitesse vibratoire de l'aimant 3 selon l'axez'.

*Action électromagnétique de l'aimant 3 lorsqu'il se trouve en vis-à-vis de l'ouverture de spire*

Lorsque l'aimant 3 est en vis-à-vis de l'ouverture de spire 46, le conducteur électrique 4 s'échappe de l'influence du champ magnétique B de l'aimant 3 ; toutefois, la partie centrale 70 du deuxième conducteur électrique 7 rentre dans ce champ magnétique B et génère la tension U2, qui s'exprime selon la formule suivante :

$$U_2 = \int_C^D \vec{E}_m . \overrightarrow{dl} = \int_C^D V_{rot} B_{x'} \, \vec{e}_{x'} . \overrightarrow{dl} = V_{rot} B_{x'} l_{CD}$$

où $l_{CD}$ désigne la longueur du segment de partie centrale 70 soumis à l'influence de l'aimant, $B_{x'}$ désigne la composante radiale du champ magnétique généré par l'aimant 3, et $V_{rot}$ est la vitesse de rotation de l'aimant 3.

*Détermination de la vitesse de rotation de la pale*

Le mouvement responsable de la génération de la tension U2 dans le conducteur électrique correspondant 7 est la rotation de la roue aubagée 2 autour de son axe.

La vitesse de rotation $V_{rot}$ de l'aimant 3 solidaire de la tête 21 de la pale 20 peut être déterminée au cours de l'étape 104 par le dispositif de mesure 6 en réalisant continûment, pendant une durée prédéterminée, l'acquisition d'un signal temporel de tension U2 aux bornes du deuxième conducteur, lequel signal comporte une pluralité de pics de tension, chaque pic de tension correspondant au passage de l'aimant en vis-à-vis de l'ouverture de spire 46 au cours d'un tour de pale respectif.

La durée écoulée entre les instants d'acquisition de deux pics successifs représente ainsi la durée d'un tour de pale ; la vitesse de rotation de l'aimant 3 peut alors être calculée par le dispositif 6 à partir de la durée écoulée entre deux pics (ou d'une moyenne de telles durées), et à partir de la position radiale OO' de l'aimant 3 autour de l'axe de rotation de la roue aubagée (illustrée sur la figure 4).

*Calcul de vitesse vibratoire axiale de la pale*

En combinant les relations définies précédemment pour les tensions électriques U1 et U2, on obtient la relation suivante :

$$\frac{U_1}{U_2} = \frac{V_{VIBz'} B_{x'} l_{AB}}{V_{rot} B_{x'} l_{CD}}$$

Si le champ magnétique généré par l'aimant est isotrope autour de son axe, alors les longueurs de spires sous influence de l'aimant sont égales ($l_{AB} = l_{CD}$). On obtient alors la relation suivante :

$$\frac{U_1}{U_2} = \frac{V_{VIBz'}}{V_{rot}}$$

Au cours de l'étape 104, la composante axiale de vitesse vibratoire subie par l'aimant 3 (et donc la pale 20) est calculée selon la formule suivante combinant les relations définissant les tensions U1 et U2 :

$$V_{VIBz\prime} = V_{rot}.\frac{U_1}{U_2}$$

Cette équation permet avantageusement de s'affranchir d'une quelconque mesure de champ magnétique dans l'un ou l'autre des conducteurs électriques 4 et 7 (ces grandeurs étant éliminées dans l'équation ci-dessus).

Par ailleurs, ce procédé supplémentaire permet d'obtenir des informations quantitatives relatives aux vibrations de la pale, et non uniquement qualitatives.

Plus précisément, on peut alors associer des niveaux de vitesses vibratoires à des fréquences de résonances révélées sur des diagrammes de Campbell élaborés à partir de signaux de tensions mesurés aux bornes du premier conducteur électrique, sans avoir à mesurer l'amplitude du champ magnétique au niveau de la spire.

Lorsque la pale est excitée par un ordre moteur (n x la vitesse de rotation, avec n entier) la tension U1 augmente. Le montage proposé permet de transformer l'information de tension en vitesse vibratoire lorsque la pale est excitée.

*Matériaux*

Chaque partie centrale 40, 70 des conducteurs électrique peut être positionnée directement sur la surface interne 10 du carter 1, en regard de la roue aubagée 2.

En variante, chaque partie centrale 40, 70 de conducteur peut être positionné à l'intérieur du carter 1, en s'assurant toutefois que toute portion de matière du carter 1 localisée entre chaque partie centrale 40, 70 et l'aimant 3 autorise une bonne transmission du champ magnétique généré par l'aimant 3 jusqu'à la partie centrale 40, 70. On pourra alors veiller à réaliser ladite portion de matière en un matériau paramagnétique et diamagnétique, ces matériaux présentant en effet des valeurs de perméabilité magnétiques proche de 1. Ainsi, le flux magnétique de l'aimant 3 serait très peu modifié, on pourra donc exploiter tout le flux magnétique généré par l'aimant 3 dans les mesures réalisées.

Chaque conducteur électrique 4, 7 est par exemple toute ou partie noyé dans un dépôt abradable localisé sur la surface interne 10 du carter 1 en regard de la roue aubagée 2, le dépôt abradable étant réalisé en un tel matériau paramagnétique ou diamagnétique.

L'aimant 3 peut en outre être constitué en aluminium-nickel-cobalt (AlNiCo) avec un point de curie entre 800°C et 850°C (le point de curie étant la température à laquelle le matériau perd son aimantation spontanée).

L'amplificateur 5 peut être un amplificateur de type à courant constant, permettant avantageusement d'appliquer des gains jusqu'à 3000. Il est ainsi possible d'amplifier la tension aux bornes du conducteur électrique 4 pour obtenir une tension mesurable de l'ordre du millivolt.

L'ensemble E pour turbomachine décrit est applicable à tout type d'aubage mobile en rotation dans une structure fixe assimilable à un carter: roues axiales, rouets centrifuges, turbines haute pression, turbines libres, etc.

Une turbomachine comprenant un tel ensemble E peut également être embarquée dans tout type de véhicule, notamment un aéronef.

**Revendications**

1. Ensemble (E) pour turbomachine, l'ensemble (E) comprenant un carter (1) et une roue aubagée (2) mobile en rotation dans le carter (1), la roue aubagée (2) comportant au moins une pale (20) présentant une tête (21) en vis-à-vis du carter (1), tête (21) comportant un aimant (3) et le carter (1) comportant un premier et un deuxième conducteurs électriques (4, 7), chaque conducteur électrique étant adapté pour générer entre ses bornes une tension électrique induite par l'aimant (3) de la tête (21) en vis-à-vis représentative de vibrations subies par la tête (21) de la pale (20) lors de la mise en rotation de la roue aubagée (2), le premier conducteur électrique (4) comprenant une première partie centrale (40) s'étendant autour de l'axe de rotation (z) de la roue aubagée (2) **caractérisé en ce que** le premier conducteur électrique (4) comporte deux extrémités (42,42') en vis-à-vis, et le deuxième conducteur électrique (7) comprend une deuxième partie centrale (70) traversant un espace (46) laissé par la première partie centrale (40) entre ses deux extrémités (42,42').

2. Ensemble (E) selon la revendication 1, dans lequel la première partie centrale (40) s'étend dans un plan de parcours de l'aimant (3) autour de l'axe de rotation (z) de la roue aubagée (2), et la deuxième partie centrale (70) s'étend orthogonalement au plan de parcours.

3. Ensemble (E) selon la revendication 2, dans lequel la première partie centrale (40) forme une portion d'un cercle centré sur un point de l'axe de rotation (z) de la roue aubagée (2), et la deuxième partie centrale (70) traverse le plan de parcours en un point dudit cercle.

4.  Ensemble (E) selon l'une des revendications 1 à 3, dans lequel l'aimant (3) est adapté pour émettre un champ magnétique selon un axe radial par rapport à l'axe de rotation (z) de la roue aubagée (2), le champ magnétique généré étant isotrope autour de l'axe radial.

5.  Ensemble (E) selon l'une des revendications 1 à 4, comprenant en outre un amplificateur (5) de tension relié aux bornes de chaque conducteur électrique.

6.  Ensemble (E) selon l'une des revendications 1 à 5, dans lequel les deux conducteurs électriques (4, 7) sont noyés au moins partiellement dans un dépôt abradable localisé sur une surface interne (10) du carter (1) en regard de la roue aubagée (2), le dépôt abradable étant réalisé en un matériau paramagnétique ou diamagnétique.

7.  Procédé de mesure de vibrations d'une pale (20) d'un ensemble (E) pour turbomachine selon l'une des revendications 1 à 6 comprenant les étapes de :

    - mise en rotation (101) de la roue aubagée (2) dans le carter (1),
    - mesure (103) aux bornes de chacun des conducteurs électriques (4, 7) d'une tension électrique respective induite par l'aimant (3) contenu dans la tête (21) de la pale (20) en vis-à-vis du carter (1),
    - détermination (104) de la vitesse de l'aimant (3),
    - calcul (105) d'une vitesse de vibration axiale subie par la tête (21) de la pale (20) à partir des deux tensions électriques mesurées et de la vitesse de l'aimant (3) déterminée.

8.  Procédé de mesure selon la revendication 7, dans lequel la détermination (104) de la vitesse de l'aimant (3) comprend les sous-étapes de :

    - acquisition d'un signal temporel de tension aux bornes du deuxième conducteur électrique (7), le signal présentant au moins deux pics successifs, chaque pic étant représentatif du passage de l'aimant (3) en vis-à-vis du deuxième conducteur électrique (7) au cours d'un tour respectif de la tête (21) autour de l'axe de rotation (z) de la roue aubagée (2), et
    - calcul de la vitesse de l'aimant (3) à partir de la position radiale de l'aimant (3) par rapport à l'axe de rotation (z) de la roue aubagée (2) et d'une durée écoulée entre les pics.

9.  Procédé de mesure selon l'une des revendications 7 ou 8, dans lequel la vitesse de vibration est calculée (105) en multipliant la vitesse de l'aimant (3) déterminée avec le rapport de la tension mesurée aux bornes du premier conducteur électrique (4) sur la tension mesurée aux bornes du deuxième conducteur électrique (7).

10. Procédé de mesure selon l'une des revendications 7 à 9, comprenant en outre une étape d'amplification (102) de l'une et/ou de l'autre tension électrique induite, mise en oeuvre avant l'étape de mesure.

**Patentansprüche**

1.  Einheit (E) für Turbomaschine, wobei die Einheit (E) ein Gehäuse (1) und ein Laufrad (2), das in dem Gehäuse (1) drehbar ist, umfasst, wobei das Laufrad (2) mindestens ein Schaufelblatt (20) enthält, das einen Kopf (21) gegenüber dem Gehäuse (1) aufweist, wobei der Kopf (21) einen Magneten (3) enthält und das Gehäuse (1) einen ersten und einen zweiten elektrischen Leiter (4, 7) enthält, wobei jeder elektrische Leiter ausgeführt ist, um zwischen seinen Klemmen eine elektrische Spannung zu erzeugen, die durch den Magneten (3) des Kopfes (21) gegenüber induziert wird, repräsentativ für Vibrationen, denen der Kopf (21) des Schaufelblattes (20) unterliegt, wenn das Laufrad (2) in Drehung versetzt wird, wobei der erste elektrische Leiter (4) einen ersten zentralen Abschnitt (40) umfasst, der sich um die Drehachse (z) des Laufrades (2) erstreckt, **dadurch gekennzeichnet, dass** der erste elektrische Leiter (4) zwei Enden (42, 42') einander gegenüber enthält, und der zweite elektrische Leiter (7) einen zweiten zentralen Abschnitt (70) umfasst, der einen Raum (46) durchquert, der von dem ersten zentralen Abschnitt (40) zwischen seinen beiden Enden (42, 42') freigelassen wird.

2.  Einheit (E) nach Anspruch 1, wobei sich der erste zentrale Abschnitt (40) über eine Verlaufsebene des Magneten (3) um die Drehachse (z) des Laufrades (2) herum erstreckt, und sich der zweite zentrale Abschnitt (70) orthogonal zur Verlaufsebene erstreckt.

3. Einheit (E) nach Anspruch 2, wobei der erste zentrale Abschnitt (40) einen Abschnitt eines Kreises bildet, der an einem Punkt der Drehachse (z) des Laufrades (2) zentriert ist, und der zweite zentrale Abschnitt (70) die Verlaufsebene an einem Punkt des Kreises durchquert.

4. Einheit (E) nach einem der Ansprüche 1 bis 3, wobei der Magnet (3) ausgeführt ist, um ein Magnetfeld entlang einer radialen Achse im Verhältnis zur Drehachse (z) des Laufrades (2) auszugeben, wobei das erzeugte Magnetfeld um die radiale Achse herum isotrop ist.

5. Einheit (E) nach einem der Ansprüche 1 bis 4, weiter einen Spannungsverstärker (5) umfassend, der mit den Klemmen eines jeden elektrischen Leiters verbunden ist.

6. Einheit (E) nach einem der Ansprüche 1 bis 5, wobei die beiden elektrischen Leiter (4, 7) zumindest teilweise in einer abschleifbaren Einlage versenkt sind, die auf einer Innenfläche (10) des Gehäuses (1) in Anbetracht des Laufrades (2) lokalisiert ist, wobei die abschleifbare Einlage aus einem paramagnetischen oder diamagnetischen Material gefertigt ist.

7. Verfahren zum Messen von Vibrationen eines Schaufelblatts (20) einer Einheit (E) für Turbomaschine nach einem der Ansprüche 1 bis 6, die Schritte umfassend:

   - In Drehung versetzen (101) des Laufrades (2) in dem Gehäuse (1),
   - Messen (103) an den Klemmen eines jeden der elektrischen Leiter (4, 7) einer jeweiligen elektrischen Spannung, die durch den Magneten (3), der in dem Kopf (21) des Schaufelblatts (20) enthalten ist, gegenüber dem Gehäuse (1) induziert wird,
   - Bestimmen (104) der Geschwindigkeit des Magneten (3),
   - Berechnen (105) einer axialen Vibrationsgeschwindigkeit, der der Kopf (21) des Schaufelblattes (20) unterliegt, aus den beiden gemessenen elektrischen Spannungen und der bestimmten Geschwindigkeit des Magneten (3).

8. Verfahren zum Messen nach Anspruch 7, wobei das Bestimmen (104) der Geschwindigkeit des Magneten (3) die Unterschritte umfasst:

   - Erfassen eines Zeitsignals für die Spannung an den Klemmen des zweiten elektrischen Leiters (7), wobei das Signal zumindest zwei aufeinanderfolgende Spitzen aufweist, wobei jede Spitze repräsentativ für den Durchlauf des Magneten (3) gegenüber dem zweiten elektrischen Leiter (7) im Laufe einer jeweiligen Umdrehung des Kopfes (21) um die Drehachse (z) des Laufrades (2) ist, und
   - Berechnen der Geschwindigkeit des Magneten (3) aus der radialen Position des Magneten (3) im Verhältnis zur Drehachse (z) des Laufrades (2) und einer abgelaufenen Dauer zwischen den Spitzen.

9. Verfahren zum Messen nach Anspruch 7 oder 8, wobei die Vibrationsgeschwindigkeit berechnet (105) wird, indem man die bestimmte Geschwindigkeit des Magneten (3) mit dem Verhältnis der an den Klemmen des ersten elektrischen Leiters (4) gemessenen Spannung zu der an den Klemmen des zweiten elektrischen Leiters (7) gemessenen Spannung multipliziert.

10. Verfahren zum Messen nach einem der Ansprüche 7 bis 9, weiter einen Schritt zum Verstärken (102) der einen und/oder der anderen induzierten elektrischen Spannung umfassend, der vor dem Schritt zum Messen umgesetzt wird.

**Claims**

1. An assembly (E) for a turbine engine, the assembly (E) comprising a casing (1) and an impeller (2) rotatably movable in the casing (1), the impeller (2) including at least one vane (20) having a tip (21) facing the casing (1), the tip (21) including a magnet (3) and the casing (1) including a first and a second electrical conductors (4, 7), each electrical conductor being adapted to generate between its terminals an electrical voltage induced by the magnet (3) of the facing tip (21) representative of vibrations sustained by the tip (21) of the vane (20) when the impeller (2) is set in rotation, the first electrical conductor (4) comprising a first central part (40) extending around the axis of rotation (z) of the impeller (2) **characterized in that** the first electrical conductor (4) includes two facing ends (42, 42'), and the second electrical conductor (7) comprises a second central part (70) passing through a space (46) left by the first central part (40) between its two ends (42, 42').

**2.** The assembly (E) according to claim 1, wherein the first central part (40) extends in a path plane of the magnet (3) around the axis of rotation (z) of the impeller (2), and the second central part (70) extends orthogonally to the path plane.

**3.** The assembly (E) according to claim 2, wherein the first central part (40) forms a portion of a circle centred on a point of the axis of rotation (z) of the impeller (2), and the second central part (70) passes through the path plane in one point of said circle.

**4.** The assembly (E) according to one of claims 1 to 3, wherein the magnet (3) is adapted to emit a magnetic field along a radial axis with respect to the axis of rotation (z) of the impeller (2), the magnetic field generated being isotropic around the radial axis.

**5.** The assembly (E) according to one of claims 1 to 4, further comprising a voltage amplifier (5) connected to the terminals of each electrical conductor.

**6.** The assembly (E) according to one of claims 1 to 5, wherein the two electrical conductors (4, 7) are embedded at least partially in an abradable deposit located on an internal surface (10) of the casing (1) facing the impeller (2), the abradable deposit being made of paramagnetic or diamagnetic material.

**7.** A method for measuring the vibrations of a vane (20) of an assembly (E) for a turbine engine according to one of claims 1 to 6, comprising the steps of:

- setting in rotation (101) of the impeller (2) inside the casing (1),
- measuring (103) at the terminals of each of the electrical conductors (4, 7) of a respective electrical voltage induced by the magnet (3) contained in the tip (21) of the vane (20) facing the casing (1),
- determining (104) the speed of the magnet (3),
- calculating (105) an axial vibration speed sustained by the tip (21) of the vane (20) based on the two measured electrical voltages and the determined speed of the magnet (3).

**8.** The method for measuring according to claim 7, wherein the determination (104) of the speed of the magnet (3) comprises the sub-steps of:

- acquisition of a voltage time signal at the terminals of the second electrical conductor (7), the signal having at least two successive peaks, each peak being representative of the passage of the magnet (3) facing the second electrical conductor (7) during a respective rotation of the tip (21) around the axis of rotation (z) of the impeller (2), and
- calculation of the speed of the magnet (3) based on the radial position of the magnet (3) with respect to the axis of rotation (z) of the impeller (2) and a duration elapsed between the peaks.

**9.** The method for measuring according to one of claims 7 or 8, wherein the vibration speed is calculated (105) by multiplying the speed of the magnet (3) determined with the ratio of the voltage measured at the terminals of the first electrical conductor (4) over the voltage measured at the terminals of the second electrical conductor (7).

**10.** The method for measuring according to one of claims 7 to 9, further comprising a step of amplifying (102) one and/or the other induced electrical voltage, performed before the measuring step.

# FIG. 1

# FIG. 2a

# FIG. 2b

# FIG. 3

| | |
|---|---|
| Mise en rotation | 101 |
| ↓ | |
| Amplification | 102 |
| ↓ | |
| Mesures | 103 |
| ↓ | |
| Détermination de vitesse de rotation | 104 |
| ↓ | |
| Calcul de vitesse vibratoire | 105 |

## FIG. 4

## FIG. 5

**EP 3 087 356 B1**

**Documents brevets cités dans la description**

- US 4757717 A